# EUROPEAN PATENT SPECIFICATION

(11) **EP 3 273 830 B1**
(45) Date of publication and mention of the grant of the patent: **24.04.2019**
(21) Application number: 16719513.0
(22) Date of filing: 23.03.2016
(51) Int. Cl.: A47J 31/46, F16K 31/524

(54) **WATER FLOW REGULATOR FOR ESPRESSO COFFEE MACHINE**
WASSERDURCHFLUSSREGLER FÜR ESPRESSOKAFFEEMASCHINE
RÉGULATEUR D'ÉCOULEMENT D'EAU POUR MACHINE À CAFÉ EXPRESSO

(30) Priority: 23.03.2015 IT MI20150427
(43) Date of publication of application: 31.01.2018
(73) Proprietor: Dalla Corte S.r.l., 20021 Baranzate di Bollate (MI) (IT)
(72) Inventor: DALLA CORTE, Paolo, 20026 Novate Milanese (Milano) (IT)
(74) Representative: Ripamonti, Enrico
(86) International application number: PCT/IB2016/051643
(87) International publication number: WO 2016/151507

(56) References cited:
- EP-A1- 2 314 183
- WO-A1-2014/177925
- GB-A- 2 188 399
- US-A- 4 650 159

## Description

The present invention is related to a water flow regulator for an espresso coffee machine.

The water flow dispensers of the known type are used in espresso dispensing machines to regulate a hot water flow in an espresso extraction unit and in particular in correspondence with the filter where a quantity of ground coffee is placed. The document WO 2014/177925 discloses an example of a flow regulator.

The known flow regulators are placed along a duct downstream a pump and include a throttling, put in parallel to the duct, which allows to slow down the water flow whenever the regulator is set to a closed configuration.

Such slowing down is necessary in order to perform an operating step that is called pre-infusion.

Specifically, the filter containing the ground coffee is gradually filled with low-pressure hot water. In this way, coffee is soaked in water but the drink is not extracted during this operating step.

During this operating step, the granules of ground coffee absorb water, thus becoming larger and preparing themselves to the actual extraction.

The pre-infusion operating step is necessary for an effective extraction of the flavors from the ground coffee and for dispensing a more palatable espresso coffee.

When the filter is full of water, this one continues being fed into the filter and its pressure increases up to allowing a true extraction of the espresso coffee.

Water dispensing shall be very accurate and adjustable during pre-infusion in order to fit, for example, different types of ground coffee or different environmental conditions or to get bouquets of different tastes and flavors, the type of coffee being equal.

Disadvantageously, the flow regulators of the known type are not capable of guaranteeing the necessary accuracy and do not guarantee repeatability and/or adjustability of the water flow, especially during the pre-infusion operating step.

In this context, the technical task underlying the present invention is that of providing a water flow regulator for an espresso coffee machine that overcomes the drawbacks of the above-mentioned known art.

In particular, it is an object of the present invention to provide a water flow regulator for an espresso coffee machine that allows an accurate, repeatable, and variable water flow regulation.

The technical task here identified and the object here specified are substantially achieved by a water flow regulator for an espresso coffee machine comprising the technical features disclosed in one or several of the attached claims.

Further features and advantages of the present invention will be more apparent from the explanatory, hence non limitative, description of a preferred but not exclusive embodiment of a water flow regulator for an espresso coffee machine, as illustrated in the attached drawings wherein:

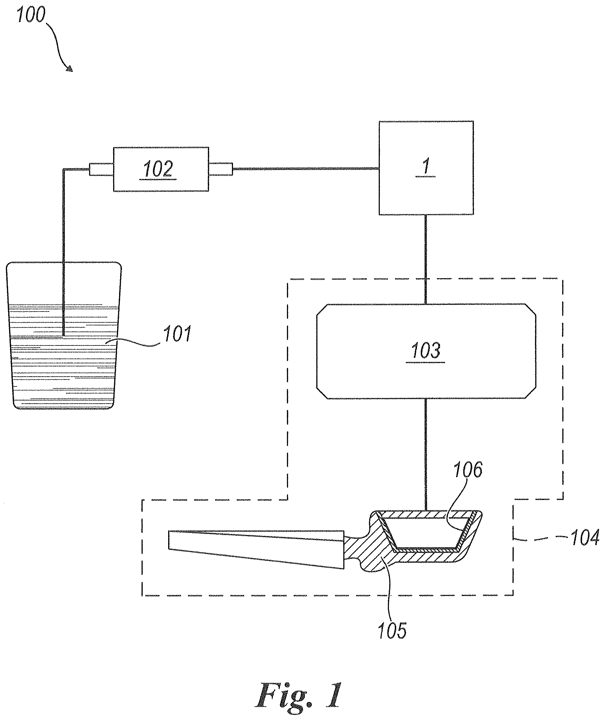

- figure 1 is a schematic representation of an espresso coffee dispensing machine comprising a water flow regulator in accordance with the present invention;

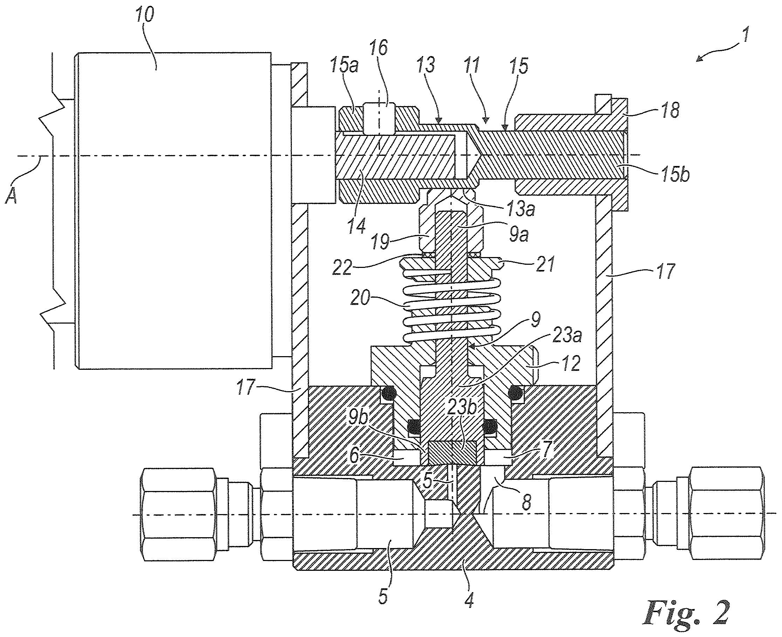

- figure 2 represents a partially cross-sectional view of the water flow regulator according to the present invention;

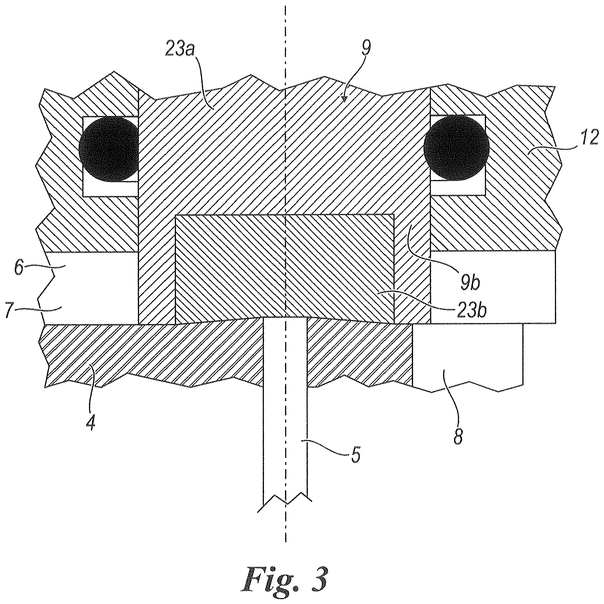

- figure 3 represents an enlarged cross-sectional view of a detail represented in figure 2.

With reference to the attached figures, the reference numeral 1 identifies a water flow regulator for an espresso coffee machine 100 as a whole.

The flow regulator 1 is mounted on an espresso coffee dispensing machine 100 which also comprises a tank 101 for containing water, a pump 102 upstream the regulator 1, and an espresso coffee dispensing unit 104 comprising a boiler 103 downstream the tank to heat water.

In an alternative embodiment, the machine 100 does not comprise any tank 101. In this event, the pump 102 is connected, preferably directly, to the water system.

The dispensing unit 104 comprises in turn a filter-holder 105 necessary to support a filter 106 for containing a predetermined quantity of ground coffee.

The flow regulator 1 is, in use, placed between the pump 102 and the boiler 103.

The connection between the tank 101, the pump 102, the flow regulator 1, the boiler 103, and the dispensing unit 104 is guaranteed by appropriate pipes which convey water from one element to the next one.

As said above, the regulator 1 is mounted downstream the pump 102 and defines, together with the latter, a water feeder.

For instance, the pump 102 can be of a rotary type. The pump 102 is functionally connected to the tank 101 of the machine 100 and to the extraction unit 104.

The flow regulator 1 comprises a main body 4 in which there are defined an inlet duct 5, a cavity 6, which the inlet duct 5 leads to and at least partially defines a chamber 7, and a water outlet duct 8 to make water go out from the cavity 6 output from the flow regulator 1.

Furthermore, the flow regulator 1 comprises a shutter 9 movable with respect to the main body 4 to selectively open and/or close a water passage opening defined in the main body 4.

The flow regulator 1 can selectively assume any configurations in the range from a completely closed configuration to a completely open configuration.

The flow regulator 1 also comprises a rotary actuator 10 operating onto the shutter 9 to linearly move it between a first position, wherein it closes the water passage opening, and a second position, wherein it fully opens the water passage opening.

It is to be noted that the connection between the actuator 10 and the shutter is not direct.

For this purpose, and in accordance with the present invention, the flow regulator 1 comprises a reducer 11 placed between the actuator 10 and the shutter 9.

In this case, the connection between the actuator 10 and the shutter 9 is indirect.

This allows a considerably accurate regulation of the position of the shutter 9 and consequently of the water flow rate.

The regulator 1 comprises a guide element 12 constrained to the main body 4 in correspondence with the cavity 6. Just as an example, the coupling between the guide element 12 and the main body 4 takes place by threading.

The guide element 12 has a substantially tubular shape and includes an internal cavity coaxial to the direction of development of the guide element 12 itself where the shutter 9 is slidingly housed.

The main body 4 in correspondence with the cavity defines, together with the guide element 12, a chamber 7. The shutter 9 features an elongated shape with a first end 9a associated with the actuator 10 and a second end 9b which, housed in the chamber 7, faces the inlet duct 5 to obstruct and/or clear it.

In detail, the first end 9a is connected to the actuator 10 via the reducer 11.

The reducer 11 comprises a cam 13 constrained to the actuator 10 and having a lateral profile 13a that is in contact with the first end 9a of the shutter 9.

So, the reducer 11 transmits the motion from the actuator to the shutter 9. In detail, it converts the rotary motion of the actuator 10 into an alternating linear motion of the shutter 9.

The actuator 10 comprises a shaft 14 arranged according to an axis of rotation "A" of its own.

The cam 13 is constrained to the shaft 14.

For this purpose, the reducer 11 comprises a bar 15 having a first end 15a associated with the shaft 14 of the actuator 10. The bar 15 is internally hollow in correspondence with the first end 15a to accommodate the shaft 14 of the actuator 10. An anti-rotation member 16 is placed between the shaft 14 and the bar 15 to prevent any relative rotation therebetween. For instance, the anti-rotation member 16 is a locking dowel.

The bar 15 is consequently coaxial to the axis of rotation "A" of the shaft 14. The cavity inside the bar 15 features a length that substantially ranges from 30% to 50% of the overall length of the bar 15. This allows a stable and accurate coupling between the bar 15 and the shaft 14 and limits and prevents relative offsets which would jeopardize regulation accuracy.

The flow regulator 1 also comprises a support structure 17 which is rigidly constrained to the main body 4.

The bar 15 is rotatably constrained to the support structure 17 in correspondence with a second end 15b thereof. In detail, a bush 18 is rigidly secured to the support structure 17 in a position coaxial to the axis of rotation "A" of the shaft 14.

In this way, the bar 15 is constrained in such a way as to remain correctly coaxial to the axis "A", hence retaining its own accurate position.

The cam 13 is derived on the bar 15. For this purpose, at least a portion of the bar 15 features a lateral surface eccentric with respect to a longitudinal axis parallel to the mentioned axis "A".

Such eccentric lateral surface defines the lateral profile 13a of the cam 13. The shutter 9 is so associated with the eccentric lateral surface.

Preferably, a cap 19 is placed on the first end 9a of the shutter 9. The cap 19 is made from bronze or from other materials featuring low friction coefficients as referred to the cam material.

Advantageously, the cap 19 makes it possible to guarantee an accurate and uninterrupted contact of the shutter 9 with the cam 13.

In order to guarantee an uninterrupted contact of the shutter 9 with the cam 13, an elastic element 20 operates between the guide element 12 and the shutter 9. In this way, the shutter 9 is permanently pushed against the cam 13 thus providing the necessary uninterrupted contact.

Preferably the elastic element 20 is a spring. In the embodiment here illustrated, a washer 21 is fixed to the shutter 9 in proximity to the first end 9a. The washer 21 features an abutting flange where an end of the spring opposite to the end abutting to the guide element 12, rests.

A regulation washer 22 is located between the washer 21 and the base of the cap 19.

As already said, the shutter 9 is aligned to at least a part of the inlet duct 5.

This allows to reduce or suppress any unaccuracies in water flow control. As a matter of fact, the water that flows in the inlet duct 5 goes into the chamber 7 in such a way as to hit the shutter 9 axially. In other words, the shutter 9 is enveloped by a symmetrical water flow which does not generate any forces transversal to the shutter 9 itself. Consequently, any vibrations onto the shutter 9, which might jeopardize its position and hence accuracy, are limited or prevented.

The inlet duct 5 develops, in correspondence with a first portion, along a rectilinear route parallel to the axis "A" and, in correspondence with a second portion, along a rectilinear route orthogonal to the direction of the route of the first portion.

Consequently the second portion is aligned to the shutter 9. The shutter 9 is arranged orthogonally to the axis "A". Likewise, the second portion extends orthogonally to the axis "A".

The shutter 9 comprises a main portion 23a and an end portion 23b placed in correspondence with the second end 9b of the shutter 9.

The end portion 23b is consequently that portion of the shutter 9 which directly obstructs and/or clears the inlet water duct 5. The distance between the end portion 23b and the outlet section into the chamber 7 of the inlet duct 5 is proportional to the regulated flow rate.

The main body 4, in the cavity 6, in correspondence with the output from the inlet duct 5 features a convex conical shape which is coaxial to the output hole of the inlet duct 5. This allows to guarantee a safe tightness whenever the shutter 9 completely closes the inlet duct 5.

Advantageously the end portion 23b is made from a material softer than the material that the main body 4 is made from.

By "soft" we mean a material that can be easily cut into and/or deformed.

Just as an example, the end portion 23b might be made from PTFE, whereas the main portion 23a might be made from stainless steel or brass.

Before the first use, the surface of the end portion 23b facing the inlet duct 5 is flat. The shutter 9 is pressed against the convex conical surface to close the output hole of the inlet duct 5. The conical portion cuts into the surface of the end portion 23b of the shutter 9, thus creating a perfectly centered counter-shaping which allows an optimum tightness of the shutter 9 whenever it is closed.

It is to be noted that in an espresso coffee machine 100 comprising a plurality of dispensing unit 104, the machine 100 also comprises a corresponding plurality of flow regulators 1, each flow regulator 1 being connected, upstream and in series, to a corresponding dispensing unit 104.

The invention achieves the aimed purpose.

The presence of a reducer located directly between the actuator and the shutter allows to make the position of the shutter itself much more accurate, thus significantly increasing the accuracy with which water flow is regulated.

In this way, it is possible to perform very accurate regulations of the pre-infusion to compensate, for instance, for changes of environmental conditions in order to get espresso coffees featuring constant organoleptic and aromatic characteristics.

According to another example, it is possible to regulate the pre-infusion with an extreme accuracy to vary taste and flavors of the drink, the ground coffee and/or environmental conditions being equal.

## Claims

1. A water flow regulator for an espresso coffee machine comprising: - a main body (4) through which water flows, a shutter (9) to open and/or close a water passage opening in the main body (4), and a rotary actuator (10) operating onto the shutter (9) to move it between an open configuration and a closed configuration; wherein the flow regulator (1) also comprises a reducer (11) operationally placed between the actuator (10) and the shutter (9), **characterized in that** said reducer (11) comprising a bar (15) internally hollow in correspondence with a first end (15a) to accommodate a shaft (14) of the actuator (10), on said bar (15) a cam (13) being derived which the shutter (9) is associated with.

2. A flow regulator according to claim 1, **characterized in that** the reducer (11) is of a type suitable for converting a rotary motion of the actuator (10) into an alternating motion of the shutter (9).

3. A flow regulator according to claim 1 or 2, **characterized in that** the rotary cam (13) of the reducer (11) comprises a lateral profile (13a) that is in contact with the shutter (9).

4. A flow regulator according to claim 3, **characterized in that** the actuator (10) comprises a shaft (14) rotating about an axis of rotation (A) of its own; the cam (13) being constrained to the shaft (14) of the actuator (10).

5. A flow regulator according to claim 3, **characterized in that** at least a portion of the bar (15) features a lateral surface eccentric with respect to a longitudinal axis of the bar (15) parallel to the axis of rotation (A) and defining the lateral profile (13a) of the cam (13) that the shutter (9) is associated with.

6. A flow regulator according to any of claims 1 thru 5, **characterized in that** it comprises a support structure (17) constrained to the main body (4); the bar (15) being rotatably constrained to the support structure (17).

7. A flow regulator according to any of the previous claims, **characterized in that** it comprises a guide element (12) for the shutter (9) constrained to the main body (4); the guide element (12) being hollow and the shutter (9) being slidingly inserted into the guide element (12).

8. A flow regulator according to claim 7, **characterized in that** it comprises a return elastic element (20) operating between the guide element (12) and the shutter (9) to retain the contact between the shutter (9) and the cam (13).

9. A flow regulator according to any of the previous claims, **characterized in that** the main body (4) includes a chamber (7) wherein the shutter (9) at least partially accommodates an inlet water duct (5) leading to the chamber (7) and an outlet water duct (8) output from the chamber (7); the shutter (9) being aligned at least to a portion of the inlet duct (5) leading to the chamber (7).

10. A flow regulator according to claim 9, **characterized in that** the shutter (9) comprises a main portion (23a) and an end portion (23b) located in correspondence with an end opposite to that of contact with the cam (13); the end portion (23b) being suitable for obstructing and/or clearing a section of the inlet duct (5) facing the chamber (7); the end portion (23b) being made from a material softer than the material that the main body (4) is made from.

11. An espresso coffee machine comprising a pump (102) and a water flow regulator (1) located directly downstream the pump (102); the flow regulator (1) being of a type in accordance with any of claims 1 thru 10.

## Patentansprüche

1. Wasserdurchflussregler für eine Espresso-Kaffeemaschine, umfassend:
- einen Hauptkörper (4), durch den Wasser fließt, eine Verschlussklappe (9), um eine Wasserdurchlassöffnung im Hauptkörper (4) zu öffnen und/oder zu schließen, und einen drehenden Aktuator (10), der auf der Verschlussklappe (9) arbeitet, um sie zwischen einer offenen Konfiguration und einer geschlossenen Konfiguration zu bewegen; wobei
der Durchflussregler (1) auch ein Reduzierstück (11) umfasst, das betriebsfähig zwischen dem Aktuator (10) und der Verschlussklappe (9) platziert ist, **dadurch gekennzeichnet, dass**
das Reduzierstück (11) eine Stange (15) umfasst, die innen in Übereinstimmung mit einem ersten Ende (15a) hohl ist, um eine Welle (14) des Aktuators (10) aufzunehmen, wobei auf der Stange (15) eine Nocke (13) ausgebildet ist, mit der die Verschlussklappe (9) verbunden ist.

2. Durchflussregler nach Anspruch 1, **dadurch gekennzeichnet, dass** das Reduzierstück (11) von einem Typ ist, der geeignet ist, eine drehende Bewegung des Aktuators (10) in eine Hin- und Herbewegung der Verschlussklappe (9) umzuwandeln.

3. Durchflussregler nach Anspruch 1 oder 2, **dadurch gekennzeichnet, dass** die drehende Nocke (13) des Reduzierstücks (11) ein Seitenprofil (13a) umfasst, das mit der Verschlussklappe (9) in Kontakt ist.

4. Durchflussregler nach Anspruch 3, **dadurch gekennzeichnet, dass** der Aktuator (10) eine Welle (14) umfasst, die sich um eine eigene Drehachse (A) dreht; wobei die Nocke (13) an der Welle (14) des Aktuators (10) befestigt ist.

5. Durchflussregler nach Anspruch 3, **dadurch gekennzeichnet, dass** mindestens ein Abschnitt der Stange (15) eine Seitenfläche aufweist, die in Bezug auf eine Längsachse der Stange (15) exzentrisch ist, die parallel zur Drehachse (A) ist und das Seitenprofil (13a) der Nocke (13) definiert, mit dem die Verschlussklappe (9) verbunden ist.

6. Durchflussregler nach einem der Ansprüche 1 bis 5, **dadurch gekennzeichnet, dass** er eine Stützstruktur (17) umfasst, die am Hauptkörper (4) befestigt ist; wobei die Stange (15) drehbar an der Stützstruktur (17) befestigt ist.

7. Durchflussregler nach einem der vorangehenden Ansprüche, **dadurch gekennzeichnet, dass** er ein Führungselement (12) für die Verschlussklappe (9) umfasst, das am Hauptkörper (4) befestigt ist; wobei das Führungselement (12) hohl ist und die Verschlussklappe (9) schiebend in das Führungselement (12) eingefügt ist.

8. Durchflussregler nach Anspruch 7, **dadurch gekennzeichnet, dass** er ein elastisches Rückstellelement (20) umfasst, das zwischen dem Führungselement (12) und der Verschlussklappe (9) agiert, um den Kontakt zwischen der Verschlussklappe (9) und der Nocke (13) beizubehalten.

9. Durchflussregler nach einem der vorangehenden Ansprüche, **dadurch gekennzeichnet, dass** der Hauptkörper (4) eine Kammer (7) enthält, wobei die Verschlussklappe (9) mindestens teilweise eine Einlasswasserleitung (5) aufnimmt, die zur Kammer (7) führt, und eine Auslasswasserleitung (8), die von der Kammer (7) ausgeht; wobei die Verschlussklappe (9) mindestens mit einem Abschnitt der Einlassleitung (5) ausgerichtet ist, die zur Kammer (7) führt.

10. Durchflussregler nach Anspruch 9, **dadurch gekennzeichnet, dass** die Verschlussklappe (9) einen Hauptabschnitt (23a) und einen Endabschnitt (23b) umfasst, der entsprechend einem Ende gegenüber jenem, das mit der Nocke (13) in Kontakt steht, gelegen ist; wobei der Endabschnitt (23b) geeignet ist, um einen Bereich der Einlassleitung (5), der zur Kammer (7) zeigt, zu blockieren und/oder frei zu machen; der Endabschnitt (23b) aus Material besteht, das weicher ist als das Material, aus dem der Hauptkörper (4) besteht.

11. Espresso-Kaffeemaschine, umfassend eine Pumpe (102) und einen Wasserdurchflussregler (1), der direkt stromabwärts der Pumpe (102) gelegen ist; wobei der Durchflussregler (1) von einem Typ nach einem der Ansprüche 1 bis 10 ist.

## Revendications

1. Régulateur de débit d'eau pour une machine à café expresso comprenant:
- un corps principal (4) à travers lequel s'écoule de l'eau, un clapet (9) pour ouvrir et/ou fermer une ouverture de passage d'eau dans le corps principal (4), et un actionneur rotatif (10) actionnant le clapet (9) pour le déplacer entre une configuration ouverte et une configuration fermée;
dans lequel le régulateur de débit (1) comprend également un réducteur (11) placé, fonctionnellement, entre l'actionneur (10) et le clapet (9), **caractérisé en ce que**
ledit réducteur (11) comprend une barre (15) creuse à l'intérieur en correspondance avec une première extrémité (15a) pour loger un arbre (14) de l'actionneur (10), sur ladite barre (15) une came (13) étant dérivée, à laquelle le clapet (9) est associé.

2. Régulateur de débit selon la revendication 1, **caractérisé en ce que** le réducteur (11) est d'un type apte à convertir un mouvement rotatif de l'actionneur (10) en un mouvement alternatif du clapet (9).

3. Régulateur de débit selon la revendication 1 ou 2, **caractérisé en ce que** la came rotative (13) du réducteur (11) comprend un profit latéral (13a) qui est en contact avec le clapet (9).

4. Régulateur de débit selon la revendication 3, **caractérisé en ce que** l'actionneur (10) comprend un arbre (14) tournant autour de son propre axe de rotation (A); la came (13) étant contrainte sur l'arbre (14) de l'actionneur (10).

5. Régulateur de débit selon la revendication 3, **caractérisé en ce qu'**au moins une portion de la barre (15) comporte une surface latérale excentrique par rapport à un axe longitudinal de la barre (15) parallèle à l'axe de rotation (A) et définissant le profit latéral (13a) de la came (13) auquel le clapet (9) est associé.

6. Régulateur de débit selon l'une quelconque des revendications 1 à 5, **caractérisé en ce qu'**il comprend une structure de support (17) contrainte sur le corps principal (4); la barre (15) étant contrainte, de manière à pouvoir tourner, sur la structure de support (17) .

7. Régulateur de débit selon l'une quelconque des revendications précédentes, **caractérisé en ce qu'**il comprend un élément de guidage (12) pour le clapet (9) contraint sur le corps principal (4); l'élément de guidage (12) étant creux et le clapet (9) étant inséré, de manière à pouvoir coulisser, dans l'élément de guidage (12).

8. Régulateur de débit selon la revendication 7, **caractérisé en ce qu'**il comprend un élément élastique de retour (20) fonctionnant entre l'élément de guidage (12) et le clapet (9) pour maintenir le contact entre le clapet (9) et la came (13).

9. Régulateur de débit selon l'une quelconque des revendications précédentes, **caractérisé en ce que** le corps principal (4) comprend une chambre (7), dans lequel le clapet (9) loge au moins partiellement un conduit d'eau d'entrée (5) conduisant à la chambre (7) et un conduit d'eau de sortie (8) sortant de la chambre (7); le clapet (9) étant aligné au moins avec une portion du conduit d'entrée (5) conduisant à la chambre (7).

10. Régulateur de débit selon la revendication 9, **caractérisé en ce que** le clapet (9) comprend une portion principale (23a) et une portion d'extrémité (23b) située en correspondance avec une extrémité à l'opposé de celle de contact avec la came (13); la portion d'extrémité (23b) étant apte à obstruer et/ou dégager une section du conduit d'entrée (5) faisant face à la chambre (7); la portion d'extrémité (23b) étant constituée d'un matériau plus souple que le matériau constituant le corps principal (4).

11. Machine à café expresso comprenant une pompe (102) et un régulateur de débit d'eau (1) situé directement en aval de la pompe (102); le régulateur de débit (1) étant d'un type selon l'une quelconque des revendications 1 à 10.
